# EUROPÄISCHE PATENTSCHRIFT

(11) **EP 2 080 932 B1**
(45) Veröffentlichungstag und Bekanntmachung des Hinweises auf die Patenterteilung: **29.08.2012**
(21) Anmeldenummer: 09000472.2
(22) Anmeldetag: 15.01.2009
(51) Int. Cl.: F16H 7/12

(54) **Zugmittelspanneinrichtung**
Tensioning device for traction means
Dispositif tendeur pour moyen de traction

(30) Priorität: 16.01.2008 DE 102008004481
(43) Veröffentlichungstag der Anmeldung: 22.07.2009
(73) Patentinhaber: Bayerische Motoren Werke Aktiengesellschaft, 80809 München (DE)
(72) Erfinder: Lemberger, Heinz, 85774 Unterföhring (DE)

(56) Entgegenhaltungen:
- EP-A1- 1 541 896
- EP-A2- 1 460 307
- WO-A1-2005/012765
- WO-A1-2005/038297
- DE-A1- 10 253 449
- DE-A1- 10 253 450
- FR-A1- 2 893 691
- US-A- 611 170

## Beschreibung

Die Erfindung betrifft eine Zugmittelspanneinrichtung für ein Zugmittelgetriebe für Nebenaggregate einer Brennkraftmaschine, mit einer Befestigungseinrichtung zur Befestigung der Zugmittelspanneinrichtung an der Brennkraftmaschine, wenigstens einer mit dem Zugmittel zusammenwirkenden Spannrolle und einer die wenigstens eine Spannrolle mit der Befestigungseinrichtung verbindenden Schwenkarmeinrichtung.

Derartige Zugmittelspanneinrichtungen sind beispielsweise aus der DE 102 53 449 A1 oder der DE 102 53 450 A1 bekannt. Der besondere Vorteil dieser Zugmittelspanneinrichtungen liegt insbesondere in deren geringem Platzbedarf. Es hat sich jedoch gezeigt, dass insbesondere bei besonders beengten Einbaubedingungen und engen Aggregatabständen selbst für diese bekannten Zugmittelspanneinrichtungen nicht immer ein ausreichender Bauraum zur Verfügung steht.

Die DE 102 53 450 A1 offenbart die Merkmale des Oberbegriffs des Anspruchs 1.

Aufgabe der Erfindung ist es, eine eingangs genannte Zugmittelspanneinrichtung bereit zu stellen, die eine nur sehr geringe Baugröße aufweist und die außerdem einen reduzierten Arbeitsraum bei zugleich hoher Wirksamkeit benötigt.

Die Lösung der Aufgabe erfolgt mit einer Zugmittelspanneinrichtung mit den Merkmalen des Anspruchs 1.

Besonders zu bevorzugende Ausführungsbeispiele sind Gegenstand der Unteransprüche.

Erfindungsgemäß weist die Schwenkarmeinrichtung zwei erste und zwei zweite Schwenkarme auf. Diese Ausführung eignet sich insbesondere für ein Zugmittelgetriebe mit wechselnder Belastung im Zugmittel, also für ein Zugmittelgetriebe, bei dem ein Antrieb nicht ausschließlich ausgehend von der Kurbelwelle der Brennkraftmaschine erfolgt, beispielsweise wenn ein Nebenaggregat ein Startergenerator, der sowohl angetrieben als Generator als auch antreibend als Starter für die Brennkraftmaschine betreibbar ist, ist.

Sehr vorteilhaft ist es, wenn der wenigstens eine erste und der wenigstens eine zweite Schwenkarm mittels ihrer Gelenkverbindung zueinander um eine zur Aufnahmegehäuseachse parallele Achse verschwenkbar sind. Damit ist eine Bewegung der Schwenkarmeinrichtung und der Spannrolle in der Zugmittelebene erreicht.

Einem besonders bevorzugten Ausführungsbeispiel zufolge weist die Befestigungseinrichtung ein rohrförmiges Aufnahmegehäuse auf, ist die Schwenkarmeinrichtung im Aufnahmegehäuse aufgenommen und zu diesem um die Aufnahmegehäuseachse verschwenkbar und ist eine zwischen Aufnahmegehäuse und Schwenkarmeinrichtung wirksame, im Aufnahmegehäuse angeordnete Drehstabfedereinrichtung zur Aufbringung einer Spannkraft vorgesehen. Damit ist nicht nur eine sehr kompakte Bauweise erzielt, sondern es wird eine insbesondere hinsichtlich Spannbewegung und Spannkraft optimale Beaufschlagung der Schwenkarmeinrichtung erreicht.

Zweckmäßigerweise ist zur gelenkigen Verbindung des wenigstens einen ersten Schwenkarms mit dem wenigstens einen zweiten Schwenkarm der wenigstens eine erste Schwenkarm oder der wenigstens eine zweite Schwenkarm gabelartig mit zwei Armen ausgestaltet und zwischen diesen zwei Armen ist der wenigstens eine zweite Schwenkarm oder der wenigstens eine erste Schwenkarm verschwenkbar aufgenommen. Durch diese Ausgestaltung kann auf besonders einfache und zugleich stabile Art eine Gelenkverbindung zwischen dem wenigstens einen ersten Schwenkarm und dem wenigstens einen zweiten Schwenkarm gebildet werden.

Nachfolgend sind unter Bezugnahme auf Figuren besonders vorteilhafte Ausführungsbeispiele der Erfindung näher erläutert, dabei zeigen schematisch und beispielhaft
- Figur 1a: ein Zugmittelgetriebe für Nebenaggregate einer Brennkraftmaschine, umfassend einen Startergenerator, mit einer Zugmittelspanneinrichtung mit zwei zweiteiiigen, gelenkverbundenen Spannarmen in neutraler Stellung,
- Figur 1b: ein Zugmittelgetriebe für Nebenaggregate einer Brennkraftmaschine, umfassend einen Startergenerator, mit einer Zugmittelspanneinrichtung mit zwei zweiteiligen, gelenkverbundenen Spannarmen im Starterbetrieb,
- Figur 1c: ein Zugmittelgetriebe für Nebenaggregate einer Brennkraftmaschine, umfassend einen Startergenerator, mit einer Zugmittelspanneinrichtung mit zwei zweiteiligen, gelenkverbundenen Spannarmen im Generatorbetrieb,
- Figur 2a: eine Zugmittelspanneinrichtung mit zwei zweiteiligen, gelenkverbundenen Spannarmen für ein Zugmittelgetriebe für Nebenaggregate einer Brennkraftmaschine,
- Figur 2b: eine Zugmittelspanneinrichtung mit zwei zweiteiligen, gelenkverbundenen Spannarmen für ein Zugmittelgetriebe für Nebenaggregate einer Brennkraftmaschine und
- Figur 3: eine Zugmittelspanneinrichtung mit einem zweiteiligen, gelenkverbundenen Spannarm für ein Zugmittelgetriebe für Nebenaggregate einer Brennkraftmaschine.

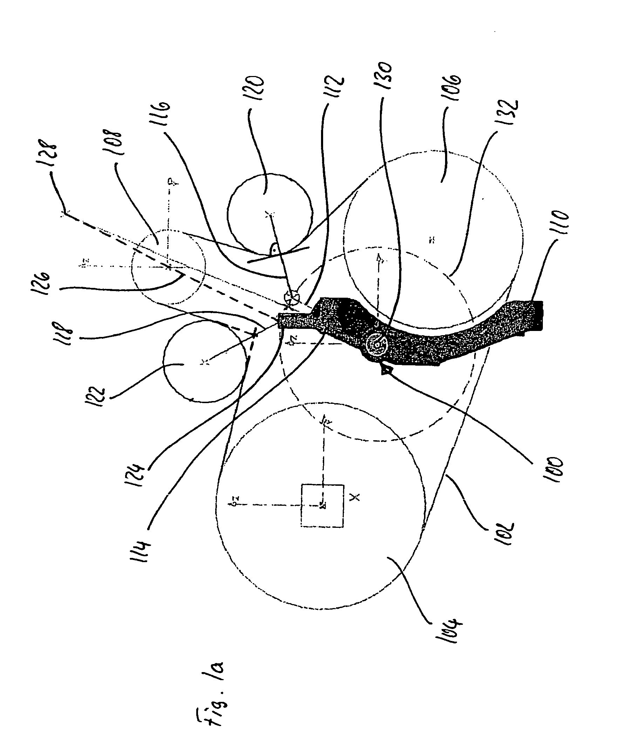

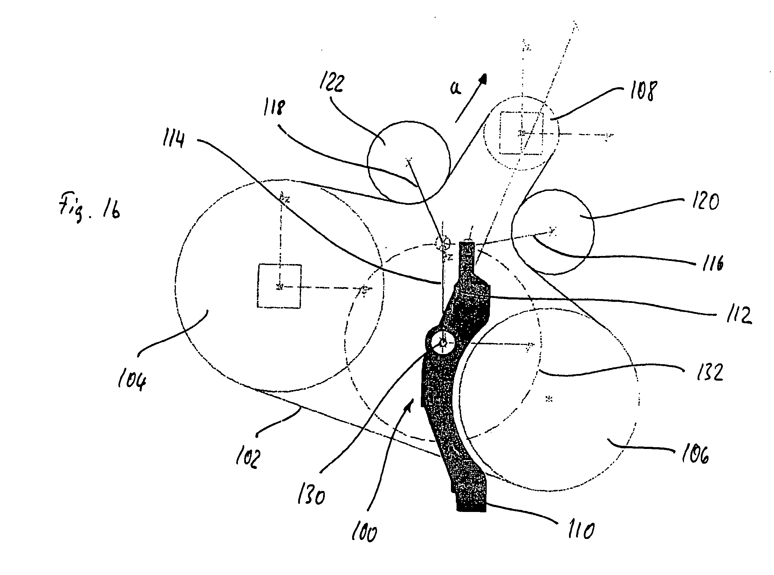

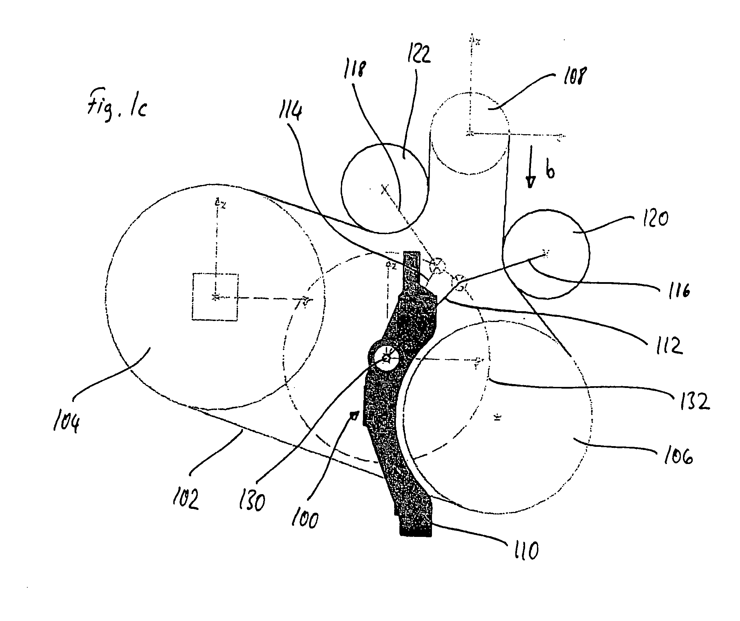

Figur 1a zeigt ein Zugmittelgetriebe für Nebenaggregate einer hier nicht näher dargestellten Brennkraftmaschine, umfassend einen Startergenerator, mit einer Zugmittelspanneinrichtung 100 mit zwei zweiteiligen, gelenkverbundenen Spannarmen 112, 116, 114, 118 in neutraler Stellung, in Figur 1b ist das Zugmittelgetriebe im Starterbetrieb und in Figur 1c im Generatorbetrieb gezeigt.

Das Zugmittelgetriebe umfasst eine mit der Kurbelwelle der Brennkraftmaschine drehfest verbundene Riemenscheibe 104, eine mit einem Nebenaggregat, vorliegend einem Klimakompressor, drehfest verbundene Riemenscheibe 106, eine mit einem Startergenerator drehfest verbundene Riemenscheibe 108 und ein Zugmittel 102, das mittels der Zugmittelspanneinrichtung 100 gespannt ist.

Die Zugmittelspanneinrichtung 100 umfasst eine Befestigungseinrichtung 110, mittels der sie an der Brennkraftmaschine, insbesondere an einem Kurbelgehäuse und/oder Zylinderkopf der Brennkraftmaschine, befestigt ist. Außerdem umfasst die Zugmittelspanneinrichtung 100 eine Schenkarmeinrichtung mit zwei ersten Schwenkarmen 112, 114 und zwei zweiten Schwenkarmen 116, 118. Die zwei ersten Schwenkarme 112, 114 sind mit der Befestigungseinrichtung 110 um eine Achse 130 verschwenkbar verbunden, wobei die Achse 130 zu der mit dem Zugmittel 102 aufgespannten Ebene senkrecht steht und die ersten Schwenkarme 112, 114 in dieser Ebene verschwenkbar sind. Mit den zwei ersten Schwenkarmen 112, 114 sind zwei zweite Schwenkarme 116, 118 gelenkig verbunden. Die Gelenkverbindungen zwischen erstem Schwenkarm 112, 114 und zweitem Schwenkarm 116, 118 ermöglichen jeweils ein Verschwenken des ersten Schwenkarms 112, 114 zum zweiten Schwenkarm 116, 118 um eine zur Achse 130 parallele Achse, sodass auch die zweiten Schwenkarme 116, 118 in der mit dem Zugmittel 102 aufgespannten Ebene verschwenkbar sind. Die zwei zweiten Schwenkarme 116, 118 tragen endseitig jeweils eine drehbare Spannrolle 120, 122, die mit der Außenseite des Zugmittels 102 zusammenwirkt und eine Spannkraft auf das Zugmittel 102 überträgt. Zur Aufbringung der Spannkraft ist eine zwischen der Befestigungseinrichtung 110 und den zwei ersten Schwenkarmen 112, 114 wirksame, hier nicht näher dargestellte mechanische Federeinrichtung, insbesondere eine Drehstabfedereinrichtung, angeordnet.

Die Gelenkverbindungen zwischen erstem Schwenkarm 112, 114 und zweitem Schwenkarm 116, 118 der Schenkarmeinrichtung bewegen sich bei einem Verschwenken der Schwenkarm 112, 114, 116, 118 immer auf einer Kreisbahn 132 mit festem Abstand zur Achse 130. Der Abstand der Spannrollen 120, 122 zur Achse 130 ist aufgrund der Gelenkverbindungen zwischen den ersten Schwenkarmen 112, 114 und den zweiten Schwenkarmen 116, 118 nicht fest, sodass die Spannrollen 120, 122 in der mit dem Zugmittel 102 aufgespannten Ebene eine kombinierte rotatorische und translatorische Bewegung bezüglich der Achse 130 ausführen können.

Die Zugmittelspanneinrichtung 100 ist im Wesentlichen im Inneren des Zugmittelgetriebes, das heißt innerhalb einer um das Zugmittelgetriebe gelegten Hüllkurve, angeordnet. Der Umschlingungswinkel an der Riemenscheibe 108 des Startergenerators beträgt in allen Arbeitsbereichen immer mindestens 180°, wodurch eine vorgegebene Mindestkraftübertragungsfähigkeit erreicht ist. Die Achse 130 liegt in Bezug auf den Punkt 128 und die Achse der Riemenscheibe 108 des Startergenerators in Idealposition. Die Schwenkarme 112, 114, 116, 118 sind so gelagert, dass die resultierende Kraft in die Mitte des Zugmittels 102 wirkt. In allen Betriebszuständen sind die Schwenkarme 116, 118 in Richtung der Winkelhalbierenden bezüglich der angrenzenden Abschnitte des Zugmittels 102 ausgerichtet. Die Spannrollen zentrieren sich selbst in Richtung der resultierenden Kraft entsprechend einem Eingriffswinkel von 90°. Über die Federeinrichtung sind die Schwenkarme 112, 116 und 114, 118 miteinander verbunden, dadurch ist eine direkte gegenseitige Beeinflussung der Schwenkarme 112, 116 und 114, 118 nach den Prinzip "Actio = Reactio" gegeben, sodass bei einem Betrieb des Zugmittelgetriebes jede Spannrolle 120, 122 stets durch die Bewegung der anderen Spannrolle 122, 120 nachgeführt wird.

Bei dem in Figur 1b dargestellten Starterbetrieb wird ausgehend von dem Startergenerator auf das Zugmittel 102 eine Zugkraft in Pfeilrichtung a aufgebracht, in deren Folge sich die Spannarme 112, 114, 116, 118 der Zugmittelspanneinrichtung 100 verlagern. Die Gelenkverbindungen zwischen erstem Schwenkarm 112, 114 und zweitem Schwenkarm 116, 118 der Schenkarmeinrichtung bewegen sich dabei auf einer Kreisbahn 132 nach links, wobei sich der von den Schwenkarmen 114 und 118 eingeschlossene Winkel und damit der Abstand der Spannrolle 122 zur Achse 130 vergrößert und sich der von den Schwenkarmen 112 und 116 eingeschlossene Winkel und damit der Abstand der Spannrolle 120 zur Achse 130 verkleinert. Die Schwenkarme 116, 118 sind auch in dieser Betriebssituation in Richtung der Winkelhalbierenden bezüglich der angrenzenden Abschnitte des Zugmittels 102 ausgerichtet.

Bei dem in Figur 1c dargestellten Generatorbetrieb wird ausgehend von der Kurbelwelle durch die Riemenscheibe 104 auf das Zugmittel 102 eine Zugkraft in Pfeilrichtung b aufgebracht, in deren Folge sich die Spannarme 112, 114, 116, 118 der Zugmittelspanneinrichtung 100 verlagern. Die Gelenkverbindungen zwischen erstem Schwenkarm 112, 114 und zweitem Schwenkarm 116, 118 der Schenkarmeinrichtung bewegen sich dabei auf einer Kreisbahn 132 nach rechts, wobei sich der von den Schwenkarmen 114 und 118 eingeschlossene Winkel und damit der Abstand der Spannrolle 122 zur Achse 130 verkleinert und sich der von den Schwenkarmen 112 und 116 eingeschlossene Winkel und damit der Abstand der Spannrolle 120 zur Achse 130 vergrößert. Die Schwenkarme 116, 118 sind auch in dieser Betriebssituation in Richtung der Winkelhalbierenden bezüglich der angrenzenden Abschnitte des Zugmittels 102 ausgerichtet.

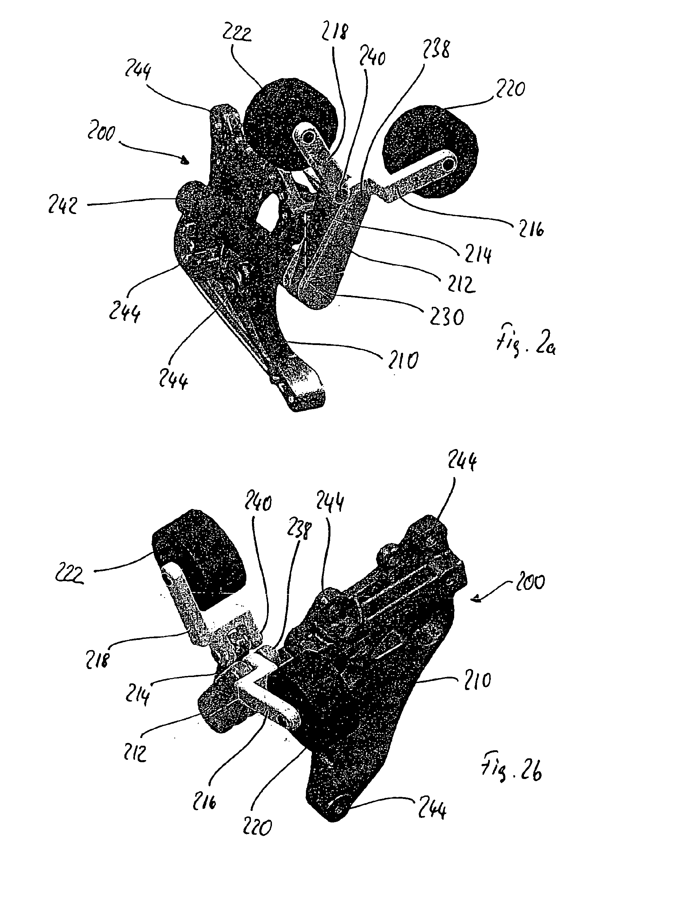

Figur 2a zeigt eine konstruktive Ausgestaltung einer Zugmittelspanneinrichtung 200 mit zwei zweiteiligen, gelenkverbundenen Spannarmen 212, 238, 216, 214, 240, 218 für ein Zugmittelgetriebe für Nebenaggregate einer Brennkraftmaschine, eine weitere Ansicht ist in Figur 2b dargestellt.

Die Befestigungseinrichtung 210 ist als leichtes Druckgussteil mit Ausnehmungen und Versteifungsrippen ausgeführt. Zur Befestigung an der Brennkraftmaschine sind Befestigungsstellen 244, vorliegend Durchgangslöcher zur Aufnahme von Befestigungsschrauben, die in Gewindebohrungen in ein Gehäuse der Brennkraftmaschine eingeschraubt werden, vorgesehen- Die Befestigungseinrichtung 210 umfasst ein rohrförmiges Aufnahmegehäuse 242, dessen Achse senkrecht zu der mit dem Zugmittel aufgespannten Ebene steht. Zwei erste Schwenkarme 212, 214 sind verschwenkbar im Aufnahmegehäuse 242 aufgenommen zusammen mit einer zwischen Befestigungseinrichtung 210 und ersten Schwenkarmen 212, 214 wirksamen, hier nicht sichtbaren Federeinrichtung, insbesondere eine Drehstabfedereinrichtung, mittels der die ersten Schwenkarmen 212, 214 spannkraftbeaufschlagt sind.

Der eine erste Schwenkarm 212 ist doppelarmig ausgestaltet. Zwischen diesen beiden Armen ist befestigungseinrichtungsseitig der andere erste Schwenkarm 214 aufgenommen. Der Schwenkarm 214 ist einarmig ausgeführt. An ihrem der Befestigungseinrichtung 210 angewandten Ende sind die ersten Schwenkarme 212, 214 jeweils mittels einer Gelenkverbindung 238, 240 mit einem zweiten Schwenkarm 216, 218 gelenkig verbunden. Die Achsen der Gelenkverbindungen 238, 240 liegen parallel zur Achse des rohrförmigen Aufnahmegehäuses 242. Die Gelenkverbindungen 238, 240 sind durch mit den Schwenkarmen 212, 214, 216, 218 verbundene Gelenkbolzen gebildet.

Zwischen den beiden Armen des Schwenkarms 212 ist an dem der Befestigungseinrichtung 210 abgewandten Ende der einarmig ausgeführte zweite Schwenkarm 216 aufgenommen. Der zweite Schwenkarm 218 ist an seinem dem ersten Schwenkarm 214 zugewandten Ende gabelartig mit zwei Armen ausgebildet und umgreift mit diesen Armen den ersten Schwenkarm 214 im Bereich der Gelenkverbindung 240. Die zweiten Schwenkarme 216, 218 sind winklig ausgeführt, sodass im bereich der Gelenkverbindungen zu den ersten Schwenkarmen 212, 214 eine symmetrischer Anbindung erfolgt und die Spannrollen 220, 222 von vorne aufgenommen sind.

Diese Ausführung ist besonders für den Einsatz mit einem Zugmittelgetriebe mit Startergenerator und damit wechselnder Lastrichtung geeignet. Hinsichtlich weiterer Merkmale und der Funktion der konstruktiven Ausführung gemäß den Figuren 2a und 2b wird auf die Figuren 1a, 1b und 1c sowie die zugehörige Beschreibung verwiesen.

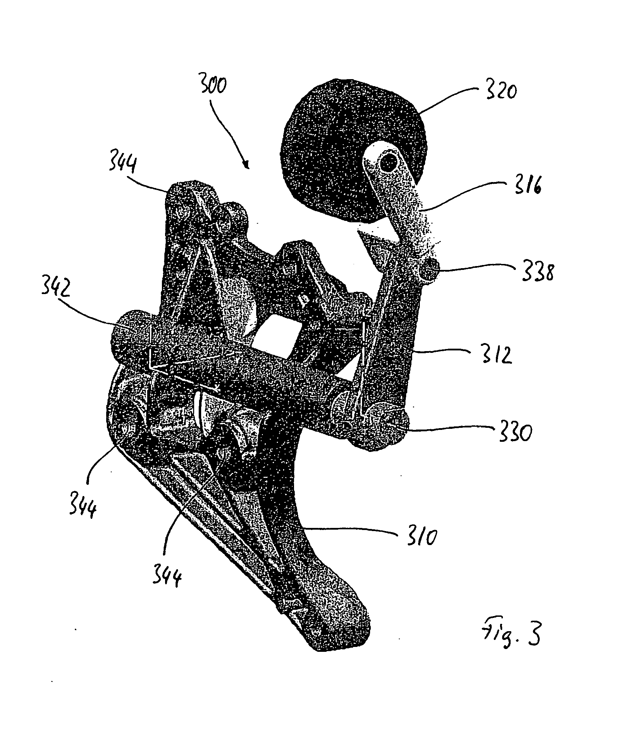

Figur 3 zeigt eine Zugmittelspanneinrichtung 300 mit einem zweiteiligen, gelenkverbundenen Spannarm 312, 338, 316 für ein Zugmittelgetriebe für Nebenaggregate einer Brennkraftmaschine.

Die Befestigungseinrichtung 310 ist als leichtes Druckgussteil mit Ausnehmungen und Versteifungsrippen ausgeführt. Zur Befestigung an der Brennkraftmaschine sind Befestigungsstellen 344, vorliegend Durchgangslöcher zur Aufnahme von Befestigungsschrauben, die in Gewindebohrungen in ein Gehäuse der Brennkraftmaschine eingeschraubt werden, vorgesehen. Die Befestigungseinrichtung 310 umfasst ein rohrförmiges Aufnahmegehäuse 342, dessen Achse senkrecht zu der mit dem Zugmittel aufgespannten Ebene steht. Ein erster Schwenkarm 312 ist verschwenkbar im Aufnahmegehäuse 342 aufgenommen zusammen mit einer zwischen Befestigungseinrichtung 310 und erstem Schwenkarm 312, wirksamen, hier nicht sichtbaren Federeinrichtung, insbesondere eine Drehstabfedereinrichtung, mittels der der erste Schwenkarm 312 spannkraftbeaufschlagt ist.

Der erste Schwenkarm 312 ist einarmig ausgeführt. An seinem der Befestigungseinrichtung 310 angewandten Ende ist der erste Schwenkarm 312 mittels einer Gelenkverbindung 338 mit einem zweiten Schwenkarm 316 gelenkig verbunden. Die Achsen der Gelenkverbindung 338 lieget parallel zur Achse des rohrförmigen Aufnahmegehäuses 342. Die Gelenkverbindung 338 ist durch mit den Schwenkarmen 312, 316 verbundene Gelenkbolzen gebildet.

Der zweite Schwenkarm 316 ist an seinem dem ersten Schwenkarm 312 zugewandten Ende gabelartig mit zwei Armen ausgebildet und umgreift mit diesen Armen den ersten Schwenkarm 316 im Bereich der Gelenkverbindung 338. Der zweite Schwenkarm 316 ist winklig ausgeführt, sodass im bereich der Gelenkverbindung 338 zu dem ersten Schwenkarm 312 eine symmetrischer Anbindung erfolgt und die Spannrolle 320 von vorne aufgenommen ist.

Diese Ausführung ist besonders für den Einsatz mit einem herkömmlichen Zugmittelgetriebe mit Generator und damit nicht wechselnder Lastrichtung geeignet. Hinsichtlich weiterer Merkmale und der Funktion der konstruktiven Ausführung gemäß den Figuren 2a und 2b wird auf die Figuren 1a, 1b und 1c sowie die zugehörige Beschreibung verwiesen.

## Patentansprüche

1. Zugmittelspanneinrichtung (100, 200, 300) für ein Zugmittelgetriebe für Nebenaggregate einer Brennkraftmaschine, mit
- einer Befestigungseinrichtung (110, 210, 310) zur Befestigung der Zugmittelspanneinrichtung (100, 200, 300) an der Brennkraftmaschine, zwei mit dem Zugmittel (102, 202, 302) zusammenwirkenden Spannrollen (120, 122, 220, 222, 320) und
- einer die zwei Spannrollen (120, 122, 220, 222, 320) mit der Befestigungseinrichtung (110, 210, 310) verbindenden Schwenkarmeinrichtung (112, 114, 116, 118, 212, 214, 216, 218, 312, 316),
**dadurch gekennzeichnet, dass** die Schwenkarmeinrichtung zwei erste, gegenüber der Befestigungseinrichtung (110, 210, 310) verschwenkbare Schwenkarme (112, 114, 212, 214, 312) und zwei jeweils mit einem der zwei ersten Schwenkarme (112, 114, 212, 214, 312) mittels einer
Gelenkverbindung (238, 240, 338) verbunden zweite, jeweils eine der Spannollen (120, 122, 220, 222, 320) tragende Schwenkarme (116, 118, 216, 218, 316) aufweist.

2. Zugmittelspanneinrichtung (100, 200, 300) nach einem der vorhergehenden Ansprüche, **dadurch gekennzeichnet, dass** der wenigstens eine erste (112, 114, 212, 214, 312) und der wenigstens eine zweite Schwenkarm (116, 118, 216, 218, 316) mittels ihrer Gelenkverbindung (238, 240, 338) zueinander um eine zur Aufnahmegehäuseachse parallele Achse verschwenkbar sind.

3. Zugmittelspanneinrichtung (100, 200, 300) nach einem der vorhergehenden Ansprüche,
**dadurch gekennzeichnet, dass**
- die Befestigungseinrichtung (110, 210, 310) ein rohrförmiges Aufnahmegehäuse (242, 342) aufweist,
- die Schwenkarmeinrichtung (112, 114, 116, 118, 212, 214, 216, 218, 312, 316) im Aufnahmegehäuse (242, 342) aufgenommen und zu diesem um die Aufnahmegehäuseachse verschwenkbar ist und
- eine zwischen Aufnahmegehäuse (242, 342) und Schwenkarmeinrichtung (112, 114, 212, 214, 312) wirksame, im Aufnahmegehäuse (242, 342) angeordnete Drehstabfedereinrichtung zur Aufbringung einer Spannkraft vorgesehen ist.

4. Zugmittelspanneinrichtung (100, 200, 300) nach einem der vorhergehenden Ansprüche, **dadurch gekennzeichnet, dass** zur gelenkigen Verbindung des wenigstens einen ersten Schwenkarms (112, 114, 212, 214, 312) mit dem wenigstens einen zweiten Schwenkarm (116, 118, 216, 218, 316) der wenigstens eine erste Schwenkarm (112, 114, 212, 214, 3112) oder der wenigstens eine zweite Schwenkarm (116, 118, 216, 218, 316) gabelartig mit zwei Armen ausgestaltet ist und zwischen diesen zwei Armen der wenigstens eine zweite Schwenkarm (116, 118, 216, 218, 316) oder der wenigstens eine erste Schwenkarm (112, 114, 212, 214, 312) verschwenkbar aufgenommen ist.

## Claims

1. A traction tensioning device (100, 200, 300) for a belt and chain drive for auxiliary units of an internal combustion engine, comprising
- a fastening device (110, 210, 310) for fastening the traction tensioning device (100, 200, 300), to the engine,
- two tension rollers (120, 122, 220, 222, 320) cooperating with the traction mechanism (102, 202, 302) and
- a swivel arm device (112, 114, 116, 118, 212, 214, 216, 218, 312, 316) connecting the two tension rollers (120, 122, 220, 222, 230) to the fastening device (110, 210, 310),
**characterised in that** the swivel arm device has two first swivel arms (112, 114, 212, 214, 312) pivotable relative to the fastening device (110, 210, 310) and two second swivel arms (116, 118, 216, 218, 316) bearing one of the tension rollers (120, 122, 220, 222, 320) and each connected to a respective one of the two first swivel arms (112, 114, 212, 214, 312) by a knuckle joint (238, 240, 338).

2. A traction tensioning device (100, 200, 300) according to any of the preceding claims,
**characterised in that** the at least one first swivel arm (112, 114, 212, 214, 312) and the at least one second swivel arm (116, 118, 216, 218, 316) are connected to one another by their knuckle joint (238, 240, 338) around an axis parallel to the axis of the casing receiving them.

3. A traction tensioning device (100, 200, 300) according to any of the preceding claims,
**characterised in that**
- the fastening device (110, 210, 310) has a tubular casing (242, 342),
- the swivel-arm device (112, 114, 116, 118, 212, 214, 216, 218, 312, 316) is received in the casing (242, 342) and pivotable relative to it around the casing axis and
- a torsion rod device operative between the casing (242, 342) and the swivel arm device (112, 114, 212, 214, 312) is disposed in the casing (242, 342) in order to exert a tension force.

4. A traction tensioning device (100, 200, 300) according to any of the preceding claims,
**characterised in that** in order to pivotably connect the at least one first swivel arm (112, 114, 212, 214, 312) to the at least one second swivel arm (116, 118, 216, 218, 316) the at least one first swivel arm (112, 114, 212, 214, 312) or the at least one second swivel arm (116, 118, 216, 218, 316) is forked with two arms and between the said two arms the at least one second swivel arm (116, 118, 216, 218, 316) or the at least one first swivel arm (112, 114, 212, 214, 312) is pivotably received.

## Revendications

1. Installation de tendeur de moyen de traction (100, 200, 300) pour une transmission à moyen de traction d'un accessoire d'un moteur à combustion interne comprenant :
- une installation de fixation (110, 210, 310) pour fixer l'installation de tendeur de moyen de traction (100, 200, 300) au moteur à combustion interne,
- deux galets tendeurs (120, 122, 220, 222, 320) coopérant avec le moyen de traction (102, 202, 302), et
- une installation à bras pivotants (112, 114, 116, 118, 212, 214, 216, 218, 312, 316) reliant les deux galets tendeurs (120, 122, 220, 222, 320) à l'installation de fixation (110, 210, 310),
installation **caractérisée en ce que**
l'installation à bras pivotants comporte deux premiers bras (112, 114, 212, 214, 312) pivotant par rapport à l'installation de fixation (110, 210, 310) et chaque fois deux seconds bras pivotants (116, 118, 216, 218, 316) portant chacun un galet tendeur (120, 122, 220, 222, 320), relié par une liaison articulée (238, 240, 338) à l'un des deux premiers bras pivotants (112, 114, 212, 214, 312).

2. Installation de tendeur de moyen de traction (100, 200, 300) selon la revendication 1,
**caractérisée en ce qu'**
au moins un premier bras pivotant (112, 114, 212, 214, 312) et au moins un second bras pivotant (116, 118, 216, 218, 316) sont reliés de manière pivotante par une liaison articulée (238, 240, 338) l'un par rapport à l'autre autour d'un axe parallèle à l'axe du boîtier de réception.

3. Installation de tendeur de moyen de traction (100, 200, 300) selon l'une des revendications précédentes,
**caractérisée en ce que**
l'installation de fixation (110, 210, 310) comporte un boîtier de réception (242, 342) tubulaire,
- l'installation à bras pivotants (112, 114, 116, 118, 212, 214, 216, 218, 312, 316) est logée dans le boîtier de réception (242, 342) et est pivotant par rapport à celui-ci autour de l'axe du boîtier de réception, et
- une installation de ressort de torsion dans le boîtier de réception (242, 342), agissant entre le boîtier de réception (242, 342) et l'installation à bras pivotants (112, 114, 212, 214, 312) pour exercer une force de tension.

4. Installation de tendeur de moyen de traction (100, 200, 300) selon l'une des revendications précédentes,
**caractérisée en ce que**
pour relier de manière articulée au moins un premier bras pivotant (112, 114, 212, 214, 312) à au moins un second bras pivotant (116, 118, 216, 218, 316), au moins un premier bras pivotant (112, 114, 212, 214, 312) ou au moins un second bras pivotant (116, 118, 216, 218, 316) a une forme de fourche à deux bras et au moins le second bras pivotant (116, 118, 216, 218, 316) ou au moins le premier bras pivotant (112, 114, 212, 214, 312) est monté de manière pivotante entre les deux bras.
